# EUROPEAN PATENT APPLICATION

(11) **EP 3 196 681 A1**
(43) Date of publication of application: **26.07.2017**
(21) Application number: 15837349.8
(22) Date of filing: 07.09.2015
(51) Int. Cl.: G02B 5/30

(54) **SECURITY FILM**

(30) Priority: 05.09.2014 KR 20140118990
(71) Applicant: Kolon Industries, Inc., Gwacheon-si, Gyeonggi-do 13837 (KR)
(72) Inventor: NAM, Si Wook, Yongin-si Gyeonggi-do 446-797 (KR); KIM, Kyung Jong, Yongin-si Gyeonggi-do 446-797 (KR); KIM, Jin Young, Yongin-si Gyeonggi-do 446-797 (KR); KIM, Chong Won, Yongin-si Gyeonggi-do 446-797 (KR)
(74) Representative: Ter Meer Steinmeister & Partner
(86) International application number: PCT/KR2015/009426
(87) International publication number: WO 2016/036223

(57) **Abstract**

Disclosed is a security film, including: a substrate layer, a nano-wire grid polarizer layer having a line grid pattern, and at least one information identification layer, wherein the substrate layer, the nano-wire grid polarizer layer and the information identification layer are stacked so that at least one information identification layer is provided in at least one position selected from among a position on an outer surface of the substrate layer, a position between the substrate layer and the nano-wire grid polarizer layer, and a position on an outer surface of the nano-wire grid polarizer layer. This invention can provide a high-dimensional information storage medium by combining a nano-wire grid polarization film, manufactured via a nano-imprinting process, with various security elements, making it possible to enhance security against illegal counterfeiting and copying.

## Description

### Technical Field

The present invention relates to a security film having enhanced security, and more particularly to a high-dimensional security film, in which a nano-patterning technique for exhibiting polarization and transmission effects is applied to an information identification layer including various security elements.

### Background Art

With the recent advent of the era in which advanced illegal techniques, such as counterfeiting, duplication, copying and unauthorized use, have proliferated and in which thorough security is required in a variety of fields, illegal activities cannot be prevented or eradicated through single-factor security technology using simple identification devices. Accordingly, a single security technology is no longer used alone, but two or more identification devices are used in combination, and identification devices such as a hologram, color-shifting ink, a watermark, a fluorescent material, a fine character, an RFID tag, and a liquid crystal compound are used together and developed so as to ensure further enhanced security.

In particular, a hologram is manufactured through a complicated procedure, and thus is difficult to consistently copy information, and is employed by banks and in credit cards to prevent forgery and is also utilized as a means for preventing the illegal copying of various books and tapes. Furthermore, as disclosed in Korean Patent No. 0736481, entitled "Anti-counterfeit hologram thin film including digital watermark image and its manufacturing method", Korean Patent Application Publication No. 2012-0077845, entitled "RFID combination type hologram and security system", and Japanese Patent No. 05380007, entitled "Anti-fake medium", techniques using various security elements based on hologram technology have been actively developed.

Meanwhile, a currently mainly useful polarizer may include a polarizer using an absorptive polarization film and a wire grid polarizer. The wire grid polarizer (WGP) indicates an array in which metal wires are arranged parallel to each other and functions to transmit or reflect only specific polarized light among electromagnetic waves. The polarizer using an absorptive polarization film is able to transmit only 50% of incident light, whereas WGP is able to reflect a polarization component parallel to the metal wire and to transmit a polarization component perpendicular thereto and may reuse the reflected light, thus exhibiting high polarization efficiency, high transmittance, and a wide viewing angle. The WGP having the above features is mainly applied to a backlight unit of a display requiring superior optical properties, and is useful in optical pickup devices or semiconductors.

Generally, the WGP is manufactured in a manner in which a UV-curable resin layer or a heat-curable resin layer is formed on a film or a glass substrate, a pattern is formed on the resin layer using a flexible mold, a metal layer is deposited on the resin pattern, and etching is performed, whereby the curable resin and the metal layer are provided in a coexisting form, or in which a line grid pattern is formed, and a pattern layer composed exclusively of metal is formed on the substrate using an etching process such as dry etching.

As for the WGP, when the period (pitch) of the metal wires is much shorter than the wavelength of incident light, a polarization extinction ratio may increase. Since metal wires having a short pitch are difficult to manufacture, to date the WGP has been mostly utilized in the range of microwaves or UV light. However, the fabrication of a fine pattern is possible due to the development of semiconductor manufacturing devices and exposure technology, making it possible to manufacture a nano-WGP that operates under visible light. Although the WGP manufacturing technique cannot be performed easily, cases where WGP is used as a security device together with various security elements so as to store or protect information in a high number of dimensions have not yet been reported.

### Disclosure

### Technical Problem

Accordingly, the present invention is intended to provide a security film, in which a nano-wire grid polarization technique is applied to an information identification layer including various security elements, whereby copying is impossible and any type of information may be stored in a high number of dimensions.

### Technical Solution

A preferred embodiment of the present invention provides a security film, comprising: a substrate layer; a nano-wire grid polarizer layer including a line grid pattern; and at least one information identification layer, wherein the substrate layer, the nano-wire grid polarizer layer and the information identification layer are stacked so that at least one information identification layer is provided in at least one position selected from among a position on an outer surface of the substrate layer, a position between the substrate layer and the nano-wire grid polarizer layer, and a position on an outer surface of the nano-wire grid polarizer layer.

In the above embodiment, the line grid pattern of the nano-wire grid polarizer layer may satisfy the following properties: (a) a height of the line grid of 25 to 300 nm; (b) a line width of the line grid of 5 to 75 nm; (c) an aspect ratio (height/line width of the line grid) of 0.1 to 3.0; and (d) a pitch of the line grid of 50 to 150 nm.

In the above embodiment, the line grid pattern may include any one of metal particles selected from the group consisting of aluminum, copper, chromium, platinum, gold, silver, nickel, and alloys thereof.

Also, the line grid pattern may have any one pattern structure selected from among a pattern composed exclusively of metal particles, a pattern formed of a curable resin in which metal particles are contained, and a pattern configured such that metal particles are stacked to a height of 10 to 300 nm on a lower skeleton formed of a curable resin.

The curable resin is preferably at least one selected from the group consisting of an acrylic resin, a methacrylic resin, a polyvinyl-based resin, a polyester-based resin, a styrene-based resin, an alkyd-based resin, an amino-based resin, a polyurethane-based resin, and a silicone-based resin.

In the above embodiment, the substrate layer may be any one transparent film selected from the group consisting of a polyethylene terephthalate film, a polycarbonate film, a polypropylene film, a polyethylene film, a polystyrene film, a polyepoxy film, a cyclic olefin-based polymer (COP) film, a cyclic olefin-based copolymer (COC) film, a copolymer film of a polycarbonate-based resin and a cyclic olefin-based polymer, and a copolymer film of a polycarbonate-based resin and a cyclic olefin-based copolymer, or may be a glass film.

### Advantageous Effects

According to the present invention, a high-dimensional information storage medium can be provided by combining a WGP, manufactured through a sophisticated and technology-intensive nano-imprinting process using a nano-level mold, with various security elements, thus enhancing security against illegal counterfeiting and copying. In particular, the security film of the invention can be easily applied to various printed or security documents, such as banknotes, securities certificates, identification cards, passports, etc., requiring security.

### Description of Drawings

FIG. 1 is a cross-sectional view showing a security film according to an embodiment of the present invention, configured such that an information identification layer is disposed on an outer surface of a substrate layer;
FIG. 2 is a cross-sectional view showing a security film according to an embodiment of the present invention, configured such that an information identification layer is disposed on an outer surface of a nano-wire grid polarizer layer;
FIG. 3 is a cross-sectional view showing a security film according to an embodiment of the present invention, configured such that an information identification layer is disposed between the substrate layer and the nano-wire grid polarizer layer;
FIG. 4 is a cross-sectional view showing a security film according to an embodiment of the present invention, configured such that respective information identification layers are disposed on the outer surface of the substrate layer and between the substrate layer and the nano-wire grid polarizer layer;
FIG. 5 is a cross-sectional view showing a security film according to an embodiment of the present invention, configured such that respective information identification layers are disposed on the outer surface of the substrate layer and on the outer surface of the nano-wire grid polarizer layer;
FIG. 6 is a cross-sectional view showing a security film according to an embodiment of the present invention, configured such that two information identification layers are disposed on the outer surface of the substrate layer;
FIG. 7 is an enlarged cross-sectional view showing the nano-line grid pattern of the nano-wire grid polarizer layer according to the present invention; and
FIG. 8 shows images of the reflection mode and the transmission mode of the security film according to a preferred embodiment of the present invention.

100: substrate layer 101: nano-wire grid polarizer layer
102, 102(a), 102(b): information identification layer
201: height of line grid pattern 202: pitch of line grid pattern
203: line width of line grid pattern

### Best Mode

The present invention addresses a security film, comprising a substrate layer, a nano-wire grid polarizer layer including a line grid pattern, and at least one information identification layer, wherein the substrate layer, the nano-wire grid polarizer layer and the information identification layer are stacked so that at least one information identification layer is provided in at least one position selected from among a position on an outer surface of the substrate layer, a position between the substrate layer and the nano-wire grid polarizer layer, and a position on an outer surface of the nano-wire grid polarizer layer.

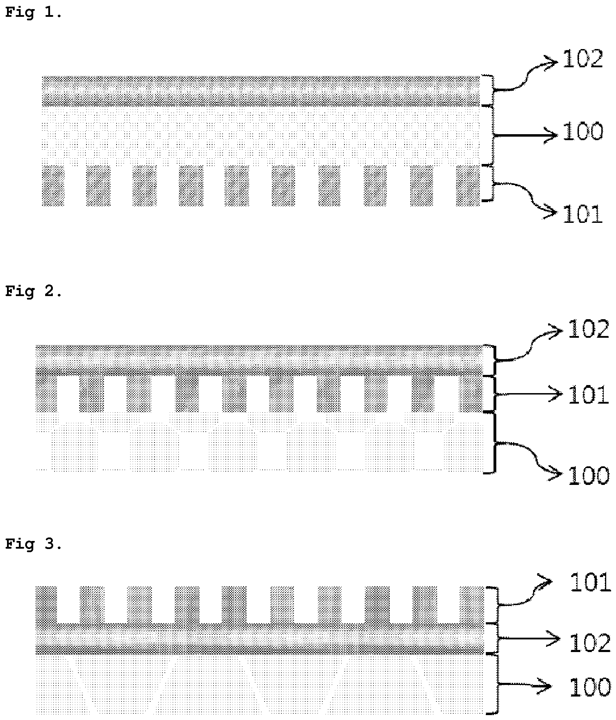

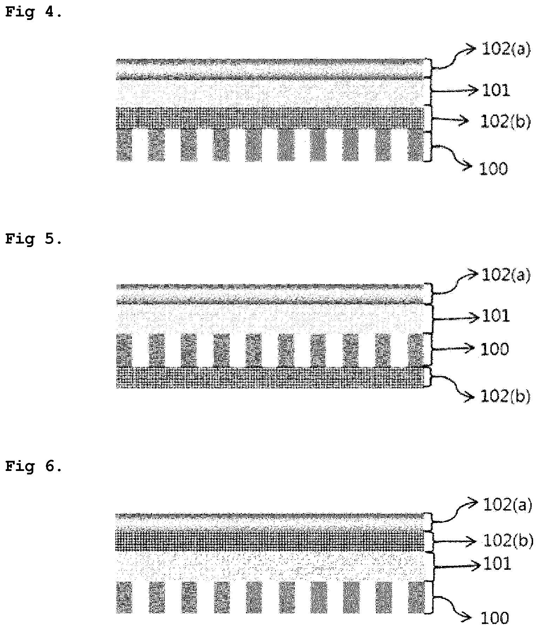

The security film of the present invention may be manufactured in various stacked structures as shown in FIGS. 1 to 6. For example, the information identification layer is stacked on one surface of the substrate layer, and the nano-wire grid polarizer (NWGP) layer is formed on the remaining surface thereof, whereby the information identification layer and the NWGP layer are spaced apart from each other, with the substrate layer being interposed therebetween (FIG. 1). Here, the sequence of formation of the information identification layer and the NWGP layer is not necessarily limited thereto, but the NWGP layer may be formed first and then the information identification layer may be formed. Alternatively, the information identification layer may be additionally formed between the substrate layer and the NWGP layer (FIG. 4) or on the outer surface of the NWGP layer (FIG. 5).

Also, the security film may be manufactured so as to have the cross-sectional structure of FIG. 2 in a manner in which the NWGP layer is formed on one surface of the substrate layer and then the information identification layer is stacked on the NWGP layer, or may be manufactured so as to have the cross-sectional structure of FIG. 3 in a manner in which the information identification layer is first formed on one surface of the substrate layer and then the NWGP layer is formed on the information identification layer. In this case, the information identification layer need not be limitedly formed only on any one layer. Even when it is formed only on one layer, it may be provided in the form of a single layer or a stacked structure in which two or more layers are laminated or otherwise applied (FIG. 6). As illustrated in FIGS. 2 and 5, the formation of the NWGP layer between the substrate layer and the information identification layer is preferable in terms of minimizing damage to the line pattern of the NWGP.

Upon stacking of the security film of the present invention, the NWGP layer may be formed through an embossing process for transferring a pattern by pressing the pattern using heat and pressure, and preferably via an imprinting process using a roll-to-roll coating process for simultaneous curing and pattern transfer. The process of stacking the information identification layer may include coating, printing, embossing, etc., and any process therefor may be used without limitation, so long as it is useful in the art.

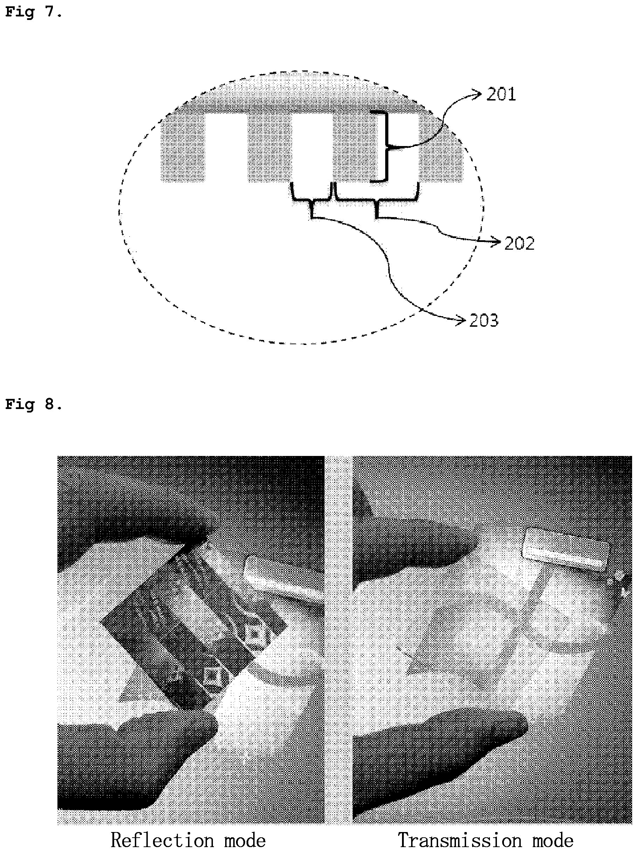

The security film of the present invention adopts a principle of transmission and reflection of light by means of the NWGP layer, whereby the security element (the right image of FIG. 8) of the information identification layer, which is not visible due to the transmission of light in a specific direction, may be observed (the left image of FIG. 8) by changing the direction of the film or by using another polarization film. Also, when multiple information identification layers are simultaneously included, the security elements, which are visible depending on the direction, are changed and thus the security function may be further enhanced. In order to maximize the reflection mode and the transmission mode, the pitch, height and line width of the line pattern of the WGP may be controlled very precisely, making it impossible to perform counterfeiting.

Below is a description of individual layers that constitute the security film of the present invention.

### [Substrate layer]

In accordance with a preferred aspect of the present invention, the substrate layer may be a transparent film or a glass film, and specifically, the transparent film may be selected from the group consisting of a polyethylene terephthalate film, a polycarbonate film, a polypropylene film, a polyethylene film, a polystyrene film, a polyepoxy film, a cyclic olefin-based polymer (COP) film, a cyclic olefin-based copolymer (COC) film, a copolymer film of a polycarbonate-based resin and a cyclic olefin-based polymer, and a copolymer film of a polycarbonate-based resin and a cyclic olefin-based copolymer.

The substrate layer functions to support the pattern layer and the information identification layer and has a thickness of 5 µm to 100 µm, and preferably 10 µm to 50 µm, so as to obtain desired mechanical strength and flexibility. In the case of a polarization film, which is typically used under severe conditions, as in displays, a substrate layer is configured such that three or more films are laminated, and the thickness thereof exceeds 100 µm. However, the security film of the present invention is required to possess a security function, rather than the ability to withstand severe conditions, and thus is provided in the form of a thin film having a thickness of 5 µm to 100 µm, whereby the range of application thereof may become wider.

### [Pattern layer]

In accordance with a preferred aspect of the present invention, the line grid pattern included in the NWGP layer is configured such that lines having a predetermined thickness are arranged parallel to each other at a predetermined interval. When viewed from the side, the cross-section thereof shows a configuration in which flat mountains and valleys are repeated. Here, the height of the line grid pattern according to the present invention, namely, the height of mountains, is 25 to 300 nm, and the width of recesses (valleys), namely the line width ranging from the end point of any one protrusion (mountain) to the start point of a protrusion adjacent thereto, is 5 to 75 nm. In particular, in order to further maximize the polarization efficiency, the aspect ratio (height/line width) preferably falls in the range of 0.1 to 3.0.

In accordance with a preferred aspect of the present invention, the pitch of the line grid pattern preferably ranges from 50 to 150 nm. Here, the pitch is a distance ranging from the start point at which any mountain (protrusion) is formed to the start point at which the next mountain is formed, namely a period of protrusions, which constitute the line grid pattern. Typically, a nano-polarization film exhibits a polarization phenomenon when the pitch value is approximately half the visible light wavelength. In order to attain higher polarization properties (an extinction ratio), it is preferred that the pitch be set as low as possible.

In the present invention, the pitch of the line pattern is preferably set to 50 nm or more taking into consideration difficulty of an etching process and the prevention of a decrease in production efficiency. In particular, since a distinct difference has to appear between the reflection mode, in which the security element of the information identification layer is visible, and the transmission mode, in which the security element appears transparent, the pitch is preferably controlled to 150 nm or less. When the pitch is controlled to fall within the above range, the polarization (reflection mode) and the transmission mode appear distinctly, whereby the function as the security element may be further enhanced.

Meanwhile, in accordance with a preferred aspect of the present invention, the line grid pattern of the nano-wire grid polarizer layer may include any one of metal particles selected from the group consisting of aluminum, copper, chromium, platinum, gold, silver, nickel and alloys thereof. Here, if the particle size of the metal particles is excessively large, patternability may become problematic, and preferably does not exceed 100 nm, and more preferably falls in the range of 1 to 100 nm.

The line grid pattern of the nano-wire grid polarizer layer may be a pattern composed exclusively of metal particles, or a pattern configured such that metal particles are added with a curable resin. In the case where the line grid pattern is formed by further adding the curable resin, the pattern may be formed in a state in which metal particles are included in the curable resin, or in which a lower skeleton of the line grid pattern is formed using a curable resin, after which the metal particles are stacked to a height of 10 to 300 nm on the skeleton.

In the present invention, when the line grid pattern is composed exclusively of metal particles, it may be formed in a manner in which a metal is deposited to a predetermined thickness on the substrate layer to form a pattern, followed by an etching process such as dry etching. Also, when the pattern is formed by further adding the curable resin, the curable resin, either alone or in combination with metal particles, may be applied on one surface of the substrate layer, and may then be transferred by a stamp or a pattern mold, on which the line grid shape is formed, followed by curing the resin. As such, the stamp may be manufactured through nickel electroforming, and the master pattern mold may be formed in a manner in which molten silica or a silicon wafer may be patterned with a line grid shape through interference lithography. The present invention is not limited to the above process of forming the line grid pattern.

In the present invention, when the line grid pattern is formed using a mixture of the curable resin and the metal particles, the metal nanoparticles are dispersed in the curable resin, or may be melted and mixed with the curable resin. Here, the dispersion or the mixture may include metal nanoparticles in an amount of 10 to 90 wt% based on the total weight thereof. The amount of the metal nanoparticles is preferably set to 10 wt% or more taking into consideration an increase in the polarization and reflection efficiency, but does not exceed 90 wt% in order to prevent dispersibility or patternability from decreasing due to the agglomeration of the particles.

In contrast, when the lower skeleton is formed using the curable resin alone, stacking metal particles on the protrusions of the lower skeleton of the pattern formed of the curable resin has to be subsequently performed. When the metal particles are stacked, an etching process is carried out so that the metal layer, which is formed on the curable resin, is selectively left behind only on the protrusions. In order to efficiently perform the etching process after the formation of the metal layer, the protrusions of the line grid pattern formed of the curable resin may be formed as high as possible, to a minimum of 50 nm.

Stacking the metal particles on the curable resin may be conducted through sputtering, thermal evaporation, e-beam evaporation, or dry etching for forming a metal layer through simultaneous etching of a polymer and a metal, but the present invention is not limited thereto. In order to facilitate the selective formation of a metal on only the protrusions of the line grid pattern during the etching process and to exhibit sufficient polarization and reflection efficiency, the thickness of the metal layer finally stacked after the etching process is controlled to 50 nm or more. Here, in order to prevent oxidation of the metal or a decrease in the flexibility of the film, the thickness of the metal layer does not exceed 300 nm.

In accordance with a preferred aspect of the present invention, the curable resin may include any type of resin able to form a pattern through a UV curing reaction, and preferably includes at least one selected from the group consisting of an acrylic resin, a methacrylic resin, a polyvinyl-based resin, a polyester-based resin, a styrene-based resin, an alkyd-based resin, an amino-based resin, a polyurethane-based resin, and a silicone-based resin.

Specific examples of the curable resin may include a homopolymer, copolymer or terpolymer of unsaturated polyester, methyl methacrylate, ethyl methacrylate, isobutylmethacrylate, n-butylmethacrylate, n-butylmethylmethacrylate, acrylic acid, methacrylic acid, hydroxyethylmethacrylate, hydroxypropylmethacrylate, hydroxyethylacrylate, acrylamide, methylolacrylamide, glycidyl methacrylate, ethyl acrylate, isobutyl acrylate, n-butyl acrylate, and 2-ethylhexylacrylate.

### [Information identification layer]

In accordance with a preferred aspect of the present invention, the information identification layer may include at least one security element selected from the group consisting of a hologram, color-shifting ink, a fluorescent material, a nano-optical lens, and a fine character. In the present invention, the security element of the information identification layer may be manufactured using a typical process, and a multilayered structure including all of a plurality of security elements may be provided depending on the end use.

In the present invention, the hologram may be configured to include a reflective hologram metal layer obtained by embossing a hologram shim to impart a hologram effect and then depositing an aluminum metal to a thickness of about 20 to 100 nm, and a protective layer formed to a thickness of 2 to 6 µm on the reflective hologram metal layer using a material selected from among polyester, PMMA (Polymethylmethacrylate), polyamide, polycarbonate, cellulose-based ester, and a polyacetal resin.

Additionally, a release layer may be formed on the protective layer using wax, silicone wax, a carbon fluoride resin, or a silicone resin, and a carrier film layer may be formed on the release layer using at least one selected from among polyester, polyacrylate, polycarbonate, cellulose ester, polyacetal and polyamide. Also, provided under the reflective hologram metal layer may be an adhesive layer comprising at least one selected from among an acrylic resin, an epoxy resin, a vinyl resin, polyimide, a polyester resin, and a urethane resin.

In the present invention, when the color-shifting ink is used as the security element of the information identification layer, a polyester resin is mixed with a color-shifting material, such as a pearl pigment, for example, Iriodin Red, Blue, or Green, available from MERCK, and is provided in the form of a thin film. As such, the polyester resin may have a molecular weight ranging from 21,000 to 26,000 to prevent cracking and to maximize a color-shifting effect. The color-shifting material preferably has an average particle size of 5 to 25 µm taking into consideration the gloss and smoothness of the surface of the resin layer.

In the present invention, as the security element of the information identification layer, a fluorescent material that is transparent under visible light (380 to 780 nm) but that shows a specific color at a wavelength of non-visible light is selected and used. The preferred fluorescent material may be exemplified by an organic sulfide, and the fluorescent material is mixed with a resin such as polyester, printed on the transparent deposition layer, and then dried using hot air or the like, thereby forming a fluorescent printed portion serving as the information identification layer.

Furthermore, dotted lines or dots are closely arranged on the background pattern to form a screen tone having a concentration of 14 to 18%, and a fine character having a weight of 0.25 to 0.30 mm, a length of 0.25 to 0.30 mm, and an interval of 0.20 to 0.29 mm is inserted, whereby a security element that may be identified only upon observation using a magnifying glass due to a camouflage effect, may be applied. As such, when the concentration of the fine character is about 2 to 3% higher than the concentration of the screen tone, reappearance through copying or outputting is impossible, but the concentration of the screen tone and the size of the fine character are not necessarily limited thereto.

In addition thereto, the security element of the present invention is not limited to the foregoing, but may include a watermark, in which a pattern or character is applied on a specific portion of paper during the manufacturing of paper so that the same pattern or character is visible through transmitted light, and a security thread, which is a thin linear film that is inserted into paper and is not visible under reflected light but may be clearly observed under transmitted light. Also, specific ink, such as intaglio ink, magnetic ink, infrared ink, CSI (Color-Shifting Ink) and metameric ink pair, may be applied, and a nano-optical lens such as a Seegram® (available from Rentech Korea) may be applied.

### Mode for Invention

A better understanding of the present invention may be obtained through the following Examples which are merely set forth to illustrate, but are not to be construed to limit the present invention.

### Control. Typical hologram film

A Kolon hologram mark was imprinted on one surface of a PET film using a UV-curable resin, thus forming a hologram pattern as a control.

### Example 1. Security film having hologram as information identification layer

A Kolon hologram mark was imprinted on one surface of a PET film using a UV-curable resin in the same manner as in the above Control, thus forming a hologram pattern, after which a pattern having a pitch of 100 nm, a line width of 50 nm, and a height of 100 nm was imprinted using a UV-curable resin on the remaining surface of the PET film on which the hologram pattern was not formed, thus forming a grid pattern. Finally, aluminum was deposited to a thickness of 50 nm on the grid pattern, thereby forming a WGP layer having the cross-sectional structure shown in FIG. 1.

### Example 2. Security film having hologram and fine character as information identification layer

The security film of Example 2 was manufactured by further stacking a film having a printed fine character on one surface of a security film manufactured in the same manner as in Example 1.

### Example 3. Security film having hologram and nano-optical lens as information identification layer

The security film of Example 3 was manufactured by further stacking a Seegram® (available from Rentech Korea) on one surface of a security film manufactured in the same manner as in Example 1.

The Control and the Examples 1 to 3 were placed on A₄ paper, and whether the security elements were observed at different angles was evaluated. The results are shown in Table 1 below.

**[Table 1]**

| | Control | Example 1 | Example 2 | Example 3 |
|---|---|---|---|---|
| Transmission mode | Observation of only hologram | No observation of hologram | Observation of fine character | Observation of nano-optical lens |
| Reflection mode | | Observation of hologram | Observation of both hologram and fine character | Observation of both hologram and nano-optical lens |

As is apparent from the results of Table 1, in Examples 1 to 3 including the nano-wire grid polarizer layer, the transmission mode and the reflection mode were set depending on the angle of the film, and as shown in FIG. 8, it was observed that the hologram disappeared, was visible, and disappeared again. As described above, the security film of the present invention is characterized in that diverse and variable security elements can be realized in a single film, and is thus deemed to exhibit an excellent security function compared to typical security elements.

## Claims

1. A security film, comprising:
a substrate layer;
a nano-wire grid polarizer layer including a line grid pattern; and
at least one information identification layer,
wherein the substrate layer, the nano-wire grid polarizer layer and the information identification layer are stacked so that the at least one information identification layer is provided in at least one position selected from among a position on an outer surface of the substrate layer, a position between the substrate layer and the nano-wire grid polarizer layer, and a position on an outer surface of the nano-wire grid polarizer layer.

2. The security film of claim 1, wherein the line grid pattern of the nano-wire grid polarizer layer satisfies the following properties:
(a) a height of a line grid: 25 to 300 nm;
(b) a line width of the line grid: 5 to 75 nm;
(c) an aspect ratio (height/line width of the line grid): 0.1 to 3.0; and
(d) a pitch of the line grid: 50 to 150 nm.

3. The security film of claim 1, wherein the line grid pattern comprises any one of metal particles selected from the group consisting of aluminum, copper, chromium, platinum, gold, silver, nickel, and alloys thereof.

4. The security film of claim 1, wherein the line grid pattern has any one pattern structure selected from among a pattern composed exclusively of metal particles, a pattern formed of a curable resin in which metal particles are contained, and a pattern configured such that metal particles are stacked to a height of 10 to 300 nm on a lower skeleton formed of a curable resin.

5. The security film of claim 4, wherein the curable resin is at least one selected from the group consisting of an acrylic resin, a methacrylic resin, a polyvinyl-based resin, a polyester-based resin, a styrene-based resin, an alkyd-based resin, an amino-based resin, a polyurethane-based resin, and a silicone-based resin.

6. The security film of claim 1, wherein the substrate layer is any one transparent film selected from the group consisting of a polyethylene terephthalate film, a polycarbonate film, a polypropylene film, a polyethylene film, a polystyrene film, a polyepoxy film, a cyclic olefin-based polymer (COP) film, a cyclic olefin-based copolymer (COC) film, a copolymer film of a polycarbonate-based resin and a cyclic olefin-based polymer, and a copolymer film of a polycarbonate-based resin and a cyclic olefin-based copolymer, or is a glass film.
